# EUROPEAN PATENT SPECIFICATION

(11) **EP 1 623 443 B1**
(45) Date of publication and mention of the grant of the patent: **11.04.2007**
(21) Application number: 04731955.3
(22) Date of filing: 10.05.2004
(51) Int. Cl.: H01J 1/13, H01J 1/304, H01J 9/02, H01J 9/04

(54) **A CATHODE FOR AN ELECTRON SOURCE**
KATHODE FÜR EINE ELEKTRONENQUELLE
CATHODE POUR UNE SOURCE ELECTRONIQUE

(30) Priority: 08.05.2003 GB 0310492
(43) Date of publication of application: 08.02.2006
(73) Proprietor: UNIVERSITY OF SURREY, Guildford, Surrey GU2 7XH (GB)
(72) Inventor: COX, David Christopher, Camberley, Surrey GU15 4JW (GB); FORREST, Roy Duncan, The Wardens Flat, Int. house, Guildford, Surrey GU2 7JL (GB); SILVA, Sembukutiarachilage Ravi, Camberley, Surrey, GU15 2ND (GB)
(74) Representative: Gray, Peter John Bracey
(86) International application number: PCT/GB2004/002017
(87) International publication number: WO 2004/100201

(56) References cited:
- WO-A-02/063693
- US-B2- 6 515 339
- PATENT ABSTRACTS OF JAPAN vol. 2000, no. 09, 13 October 2000 (2000-10-13) -& JP 2000 164112 A (MATSUSHITA ELECTRONICS INDUSTRY CORP), 16 June 2000 (2000-06-16)
- WEI Y Y ET AL: "Directed assembly of carbon nanotube electronic circuits" APPLIED PHYSICS LETTERS, AMERICAN INSTITUTE OF PHYSICS. NEW YORK, US, vol. 76, no. 25, 19 June 2000 (2000-06-19), pages 3759-3761, XP012025589 ISSN: 0003-6951
- PATENT ABSTRACTS OF JAPAN vol. 2000, no. 19, 5 June 2001 (2001-06-05) -& JP 2001 052598 A (RICOH CO LTD), 23 February 2001 (2001-02-23)

## Description

### Field of the Invention

This invention relates to a cathode for an electron source and to a method of manufacturing such a cathode. A particular, but not exclusive, implementation of the invention concerns a cathode incorporating a carbon nanotube.

### Background to the Invention

Cathodes are currently used in electron sources for many applications, including television and computer displays for example. Currently, these displays are mostly either cathode ray tubes (CRTs) or flat panel liquid crystal displays (LCDs). CRTs typically use electron sources incorporating so-called thermionic cathodes. Thermionic cathodes operate by heating an element so that free electrons conceptually "boil" off the element. An electric field between the cathode and an anode then accelerates the electrons away from the cathode. LCDs of course do not require an electron source. However, there are a variety of new flat panel display technologies coming into use that do require electron sources, including in particular flat panel displays that use electron sources incorporating so-called field emission cathodes. Field emission cathodes may be heated to some extent, but they fundamentally operate by concentrating a strong electric field between an anode and a small area of the cathode. The intensity of the electric field at the cathode causes electrons to be emitted.

With displays, the primary object is to achieve the highest picture quality possible. In most cases, and with both thermionic and field emission sources, the brightest and highest quality picture is achieved by obtaining the highest possible and most stable emission current. The most established technology for CRT displays, the oxide thermionic cathode, can achieve stable current densities of the order of 1 A/cm². Better performance can be obtained using an impregnated tungsten thermionic cathode, which can achieve stable current densities as high as 10 A/cm². However, this type of cathode is expensive and is yet to prove itself to be fully reliable.

Flat panel displays using field emission electron sources are, at present, only at the prototype stage. A large number of manufacturing issues still need to be fully resolved. For example, field emission electron sources require higher vacuum levels than thermionic sources to prevent gas adsorption or deterioration of the cathodes' tips. This is costly to produce and difficult to maintain over a product lifetime of say 10 years or more without pumping, which is impractical for a flat panel display. Similarly, damage to the tips can alter the characteristics of the electron source, increasing the required voltage and decreasing output. The cathode and anode also need to be very close to one another, e.g. a few micrometres apart, which leads to problems with mass production. Another type of display that uses an electron source incorporating a thermionic cathode is known as a vacuum fluorescent display (VFD). These are relatively simple displays and are used as graphic equalisers of home Hi-Fi equipment for example. Multiple thermionic cathodes are arranged in an array close to a low voltage phosphor screen, which may be monochrome or colour. The cathodes are operated in either a gated or non-gated configuration to cause the phosphor to emit visible light or not in a simple on/off configuration. Cathodes for use in VFDs need to thermionically emit electrons at low applied voltages.

Electron sources are also used in a variety of scientific instruments, including electron microscopes and X-ray beam instruments. As with electron sources for display applications, cathodes of electron sources for scientific instruments can be of either the thermionic or field emission type. There are also some hybrid cathode types, including for example a field emission cathode that is heated to lower the electric field strength required to cause electrons to be emitted (e.g. lower the electron work function).

Generally, when considering electron sources for scientific instruments, such as electron microscopes, considerations different from those for display technologies need to be addressed. For example, not only may current density be important, but also the stability of the source. The lifetime of the cathode may also be secondary when compared to current density and electron source stability. Other considerations may be that the emitted electrons have high coherence and/or low energy spread.

Thermionic electron sources are typically cheap, easy to replace, and require less perfect vacuums to operate than field emission electron sources, although they tend to have a relatively short life. However, compared to field emission sources, they are approximately four orders of magnitude less bright. In addition, the typical energy spread of the electrons they emit can be up to 3 eV and/or they can have poor coherence. Saying that, they are generally very stable.

By comparison, whilst field emission electron sources have a much longer life, they are much more costly and require more perfect vacuums in which to operate. The brightness of field emission electron sources is approximately four orders of magnitude higher than thermionic electron sources, despite their far lower overall emission current. This is due to the electron beam being emitted from a much smaller area than a conventional thermionic cathode and only in the direction of the applied field, and because brightness usually being expressed as a current density per unit solid angle, e.g. A cm⁻² sr⁻¹. They also have far higher coherence in the emitted beam, with a lower energy spread (as little as 0.3 eV). However, field emission electron sources suffer from inherent instability due to the build-up of adsorbed gas on their field emission tip.

To overcome the instability of field emission electron sources, hybrid electron sources that effectively comprise heated field emission sources have been developed. Heating the field emission cathode drives off adsorbed gas and improves stability by a factor of approximately three. However, in other areas, heated field emission sources inevitably compromise performance in comparison to the unheated field emission sources to some degree.

WO 02/063693 describes an electron source comprising a multilayer carbon nanotube and the present invention is characterized over this publication. However, this publication does not recognise the importance of maintaining a uniform temperature across the carbon nanotube during electron emission or suggest how this can be achieved.

In summary, on studying the types of cathode described above, it is evident that cathodes with optimum characteristics have not yet been developed. Existing thermionic cathodes have the benefit of simple structures, stable and relatively high current output, but suffer from low coherence and high energy spread. On the other hand, field emission cathodes have the benefit of high brightness, high coherence and low energy spread, but suffer from having complex structures and unstable and relatively low current outputs.

The present invention seeks to overcome these problems.

### Summary of the Invention

According to a first aspect of the present invention, there is provided a cathode for an electron source, the cathode comprising a nanowire structure for emitting electrons under the influence of electric potential applied to the nanowire structure via a support and characterised by:
the support providing a gap; and
the nanowire structure being suspended across the gap.

In other words, a nanowire structure can extend across a strip, hole, opening or slit provided by the support. It can extend from one side of the gap to the other side of the gap. As the nanowire structure is mounted on the support on either side of the gap, electric potential can be applied to the structure via the support. In other words, the support is generally electrically conductive. The structure can therefore be heated by electric current flowing through it and this facilitates the emission of electrons.

Nanowire structures conduct electric current very well. This means that the cathode of the invention can achieve high electron current density in comparison to conventional thermionic and field emission cathodes. Likewise, as the electrons are emitted from a relatively small area, e.g. around 1µm to 5µm or less, in comparison to larger conventional thermionic cathodes in particular, the coherence of the electrons is generally higher and the energy spread may be lower. The nanowire structure is also likely to have fairly uniform temperature, which can help to reduce the energy spread of the emitted electrons. Importantly, as the nanowire structure is suspended across the gap the uniformity of the heating of the nanowire structure under the influence electric current is improved.

The support is typically attached to a substrate, e.g. of insulating material. In one example, the support and substrate may substantially comprise a single plane for supporting the nanowire structure. This can simplify manufacture of the cathode, e.g. by allowing the nanowire structure to be grown on a continuous surface.

In another example, the gap may comprise a recess or hole over which the nanowire structure extends. The nanowire structure may therefore bridge the gap.

Different nanowire structures can be suitable for different types of cathode. The invention can be utilised to produce both field emission, and thermionic electron sources. The invention therefore provides a thermionic electron source comprising the preceding cathode. The invention also provides a field emission electron source comprising the preceding cathode. These cathodes might find use in electron beam instruments, X-ray sources, and displays, but are not limited to these uses.

In one example, the nanowire structure comprises a single nanowire extending across the gap. This is a very simple construction and consequently lends itself well to mass production. In particular, as described in more detail below, a cathode having this construction can be manufactured relatively straightforwardly by growing the nanowire across the gap, e.g. between catalytic particles in the presence of an electric field. In another preferred example, the nanowire structure comprises nanowires joined to one another to extend across the gap and to provide an apex from which electrons can be emitted. More specifically, the nanowire structure may comprise two nanowires joined to one another to form the apex and mounted on respective opposing sides of the gap distal to the apex. This has the advantage of reducing the area from which electrons are emitted to substantially that of the apex, with the result that a higher current density can be achieved. Cathodes having this construction also emit electrons more directionally than those having the single nanowire construction mentioned above and conventional thermionic cathodes in general. Indeed, cathodes having this construction can provide an electron beam having coherency and energy spread comparable with conventional field emission cathodes, but with a far higher current output than is achievable by conventional field emission cathodes.

In yet another preferred example, the nanowire structure may comprise nanowires joined to one another to extend across the gap and leave a free nanowire end from which electrons can be emitted. More specifically, the nanowire structure may comprise two nanowires mounted on respective opposing sides of the gap, an end of one nanowire being joined to the other nanowire along the length of the other nanowire. In other words, the nanowires may form a T-shape, with two ends attached to respective sides of the gap. The join may be midway along the length of the other nanowire. Similarly, the nanowires may be orthogonal to one another. This construction is particularly suited to a new field emission type cathode in which electrons are extracted from the free nanowire end using an electric field applied by an anode. However, it has a number of advantages over conventional field emission cathodes. For example, the overall size of cathode of the invention can be significantly smaller than that of conventional field emission cathodes, e.g. only a few µm across. Likewise, the cathode of the invention is able to carry a far higher current than conventional field emission cathode, e.g. up to around 10⁹ A/cm².

This example also lends itself to doping to improve the emission of electrons. More specifically, the join between the two nanotubes may be doped. This provides a semi-conductor junction at the join and can increases the number of electrons emitted by the cathode for a given electric field strength.

The support may have a variety of constructions. Generally, the gap should be between around 1 to 10 µm wide, and preferably around 5 µm wide. This width is suitable for supporting a typical nanowire. Indeed, it is particularly preferred that the gap is around 5 µm. Providing reliable gaps of this size can be problematic. So, in a particularly preferred example, the support comprises a pair of carbon fibres spaced apart from one another to provide the gap. Carbon fibres are useful as they are good electrical conductors and lend themselves to nanoscale manufacturing methods, as described in more detail below.

The carbon fibres may be mounted on a substrate. However, in a particularly preferred example, the support comprises a pair of posts on each of which a respective carbon fibre is mounted. The post may be electrically conductive and mounted on an electrically insulating substrate. This allows electric potential to be selectively applied to the nanowire structure via the posts. As the posts can be larger than the nanowire structure, say in the order of a few µm in diameter, it is easier to make microscale circuits based on the posts.

Whilst this makes for easier manufacture of circuitry associated with the cathode, it can be appreciated that cathode manufacture is far from straightforward. In particular, it requires careful manipulation at a nanoscale level. However, the cathode of the invention lends itself to more straightforward manufacture than other cathodes incorporating nanoscale structures.

According to a second aspect of the present invention, there is therefore provided a method of manufacturing a cathode for an electron source, the cathode comprising a nanowire structure for emitting electrons under the influence of electric potential applied to the nanowire structure via a support and the method characterised by:
forming the support to provide a gap; and
suspending the nanowire structure across the gap.

Suspending a nanowire structure across a gap in a support lends itself to accurate positioning of the nanowire structure. For example, rather than growing nanowires of the nanowire structure on a substrate and then manipulating the substrate to form the cathode, the nanowires can be grown across the gap. Alternatively, the nanowire structure can be attached to the support. In other words, the suspending may comprise bridging the gap with the nanowire structure. As the structure extends from one side of the gap to the other, the position and structure of the support itself can define the position and orientation of the nanowire structure. This facilitates easier and more reliable manufacture.

The support can be formed in a variety of ways. For example, two separate elements can be brought close to one another to provide the gap. However, it is preferred that a portion of a support is removed to provide the gap. This is generally more reliable, as moving and mounting supports on a substrate with nanoscale accuracy is more difficult than removing a nanoscale portion of a support already mounted on a substrate. For example, the portion of the support may removed using semiconductor lithography techniques or focused ion beam milling.

However, in a particularly preferred example, the removal comprises passing an electric current along the support to vaporise the portion. For example, where the support comprises a carbon fibre, the current can cause a portion of the fibre to vaporise, leaving to carbon fibres with a gap between one another. Carbon fibres are particularly suited to this technique, as they tend to fuse with only a small portion of the fibre being vaporised and without damage or bending of the remaining pair of carbon fibres. Similarly, carbon fibres tend to vaporise rather then melt, with the result that no melted and then re-solidified material is deposited on the fibres, like the bead of metal often observed on metal fuses.

The suspending typically comprises attaching a nanowire structure to the support on each side of the gap. This can be achieved using an appropriate resin or by welding the structure to the support. However, in a particularly preferred example, the suspending comprises growing a nanowire across the gap. For example, catalytic particles may be attached to the support and a nanowire grown in the desired direction in the presence of an electric field. This allows many cathodes to be grown at once, e.g. in an array.

The nanowires may be carbon nanotubes. Similarly, the nanowire structure may be a carbon nanotube structure. So, the invention generally concerns cathodes for electron sources that can be based on carbon nanotubes and nanofibres. It should therefore be understood that the term "nanowire" is intended to refer to elongate elements having a diameter in the order of nanometres, e.g around 1 nm to 100 nm or a few hundred nm. Likewise, the term "nanowire structure" is intended to refer to a structure composed of such nanowires, although the overall dimensions, e.g. length and/or width of the nanowire structure may of course be a few micrometres or so.

Carbon nanotubes have particularly useful characteristics for the cathode of the invention. In particular, they have very good electrical conductivity and relatively high melting temperature and thermal stability. This enables high electron current densities to be achieved.

Whilst the invention is not limited to carbon nanotubes or nanofibres produced by any particular method, and, as such, nanotubes and nanofibres produced by any conventional method can be used in the invention, the applicants have recognised that multi-wall carbon nanotubes grown at low temperatures by chemical vapour deposition (and therefore being structurally defective on the atomic scale) offer the highest levels of performance. This is due to their relatively poor thermal conductivity (when compared to nanotubes grown at higher temperatures), combined with the inherent high current carrying capability of carbon nanotubes in general. Indeed, the carbon nanotubes may be provided with higher resistances and more defects by adding impurities or structurally changing their composition during growth or after growth by treating with energy sources.

It will be understood that the carbon nanotubes and fibres referred to in this patent application may be either single wall or multi-wall nanotubes; that is they may be considered to be constructed from one or more concentric layers of graphitic carbon material. Likewise, they may be formed in other arrangements such as staked-cup, bamboo-like or herring-bone like.

The invention specified is also not limited only to carbon nanotubes, but can be applied to all forms of nanowires, nanostructures, whiskers or filaments. They can be as grown, fabricated in situ or assembled ex-situ. The materials can be crystalline, polycrystalline, nanocrystalline or amorphous in nature.

The invention will now be described, by way of example only, with reference to the accompanying drawings.

### Brief Description of the Drawings

Figure 1 is a schematic diagram of a thermionic cathode according to the invention;
Figure 2 is a graphical illustration emission current obtained from the cathode of Figure 1;
Figure 3 is a schematic diagram of a directional thermionic cathode according to the invention; and
Figure 4 is schematic diagram of a thermally assisted field emission cathode according to the invention.

### Detailed Description of the Preferred Embodiments

### Thermionic Cathode

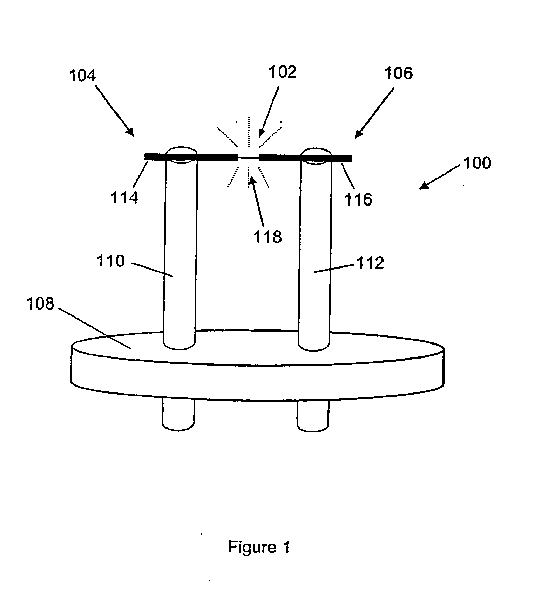

Referring to Figure 1, a thermionic cathode 100 comprises an individual carbon nanotube 102 attached between two electrodes 104, 106. The electrodes 104, 106 are mounted on a substrate or, in this embodiment, attached to an insulating base 108. The electrodes 104, 106 each comprise a post 110, 112 and a carbon fibre 114, 116. The posts 110, 112 are each generally upright with respect to the base 108 and spaced part from one another by around 3mm. The carbon fibres 114, 116 are attached to the ends of the posts 110, 112 distal from the base 108 and extend toward one another, substantially along a single axis. In this embodiment, the carbon fibres 114, 116 are each substantially orthogonal to the post 110, 112 to which they are attached and extend a roughly equal distance toward one another. So, the electrodes 104, 106 can be thought of as almost forming a goalpost shape, although the cross bar is divided into two parts (each of the carbon fibres 114, 116). The carbon fibres 114, 116 typically have a diameter of around 5*µ*m and the posts 110, 112 are made of metal. The electrodes 104, 106 therefore each provide good electrical contact to the carbon nanotube 102.

A gap 118 narrower (or shorter) than the length of the nanotube 102 is provided between the two electrodes 104, 106. More specifically, the carbon fibres 114, 116 are spaced apart from one another by the gap 118. In this embodiment, the gap 118 is 4-5 µm wide, although smaller gaps 118 may be used, e.g. to create "nano-gaps" for highly directional and compact electron sources, if desired.

In this embodiment, the nanotube 102 is a multi-wall carbon nanotube grown at relatively low temperatures by chemical vapour deposition. The nanotube 102 is around 5µm long and around 50nm diameter, although the nanotube 102 may have significantly different dimensions in other embodiments.

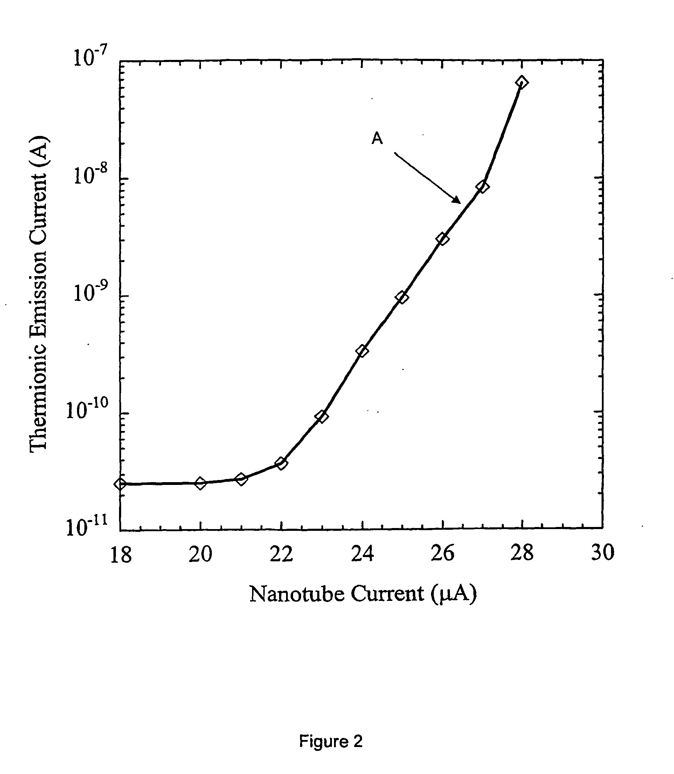

The applicants have demonstrated that the thermionic cathode 100 can provide an emission current of approximately 3% of the current passed through the nanotube 102. This is represented by the upper limit of the curve A in Figure 2. Currents in excess of this value have been collected using different anode configurations, and in all cases at very low voltages in the range of around 1 to 10 V. This compares very favourably with conventional thermionic cathodes where typical emission currents of less than 1% are achieved. Emission currents of this magnitude from a nanotube 102 that is 5µm long and 50nm in diameter also suggest that the emission current density is greater than 5 A/cm². In actuality, the emission current density will almost certainly be far higher than this as: 1) the ends of the nanotube 102 generally emit slightly less because they are joined to the electrodes 104, 106 and are hence cooled by conduction to the electrodes 104, 106; and 2) the method by which the current density is measured is unlikely to collect 100% of the emitted electrons.

In order to manufacture the thermionic cathode 100, the posts 110, 112 are first attached to the substrate 108. This can be achieved using a number of conventional techniques, but it is preferred that many pairs of posts are attached to a single substrate sheet and that the pairs of posts 110, 112 are separated by cutting the substrate sheet into individual substrates, if desired, later in the process.

A single carbon fibre is then attached between the posts 110, 112. The carbon fibre may be attached to the posts 110, 112 using a suitable conductive epoxy resin, by welding or by chemical deposition. However, the contact between the posts 110, 112 and the carbon fibre should have good electrical conductivity. The carbon fibre typically has a diameter between around 5 µm to 7 µm and a length of around 3mm.

Once the carbon fibre is in place, a voltage is applied across the two metal posts, typically between around 20 to 30 V, with no significant current limit. As the carbon fibre is unable to carry the current, it fuses in the middle creating the gap 118. The gap 118 is around the same width as the diameter of the carbon fibre, e.g. approximately 5 µm. Whilst other micro scale fibres can be used, one advantage of using a carbon fibre is that when the failure occurs the rest of the fibre does not heat sufficiently to cause it to bend and increase the gap, as is often the case when metal wires are used. So, the two carbon fibres 114, 116 of the electrodes 104, 106 of the thermionic cathode 100 are formed from a single carbon fibre. In a preferred embodiment, this is repeated for several carbon fibres attached to several pairs of posts 110, 112 on a substrate sheet.

With the gap 118 provided between the two electrodes 104, 106, the carbon nanotube 102 is attached between the two electrode ends, e.g. the ends of the carbon fibres 114, 116. One method of attaching the nanotube 102 to the electrodes 104, 106 is to use methods similar to those described in International patent application no. PCT/GB2004/000849, in which a series of manipulators inside a scanning electron microscope are used to manipulate, cut and weld nanotubes to each other or to suitable substrates. However, a variety of other methods can be used. In one embodiment, the nanotube 102 is attached to the electrodes 104, 106 using chemical deposition. This can have the advantage of introducing impurities and defects to the nanotube 102, which can potentially increase electron emission.

In another embodiment, the carbon nanotube 102 is grown in situ. More specifically, catalytic particles are placed on the carbon fibres 114, 116. These can take the form of a catalyst impregnated in the fibres 114, 116, such as cobalt for example. In another embodiment, catalytic particles are deposited on the fibres 114, 116 using ion deposition. An electric field is then applied between the fibres 114, 116, e.g. between the catalytic particles in the direction in which it is desired for the length of the carbon nanotube 102 to extend. At the same time, the carbon fibres 114, 116 are surrounded by a hydrocarbon gas, e.g. methane, or possibly carbon dioxide. This results in the growth of a carbon nanotube 102 extending between the fibres 114, 116. The grown nanotube 102 is typically has a comparatively poor microstructure. However, this is advantageous for a thermionic cathode, as it can improve electron emission.

### Directional Thermionic Cathode

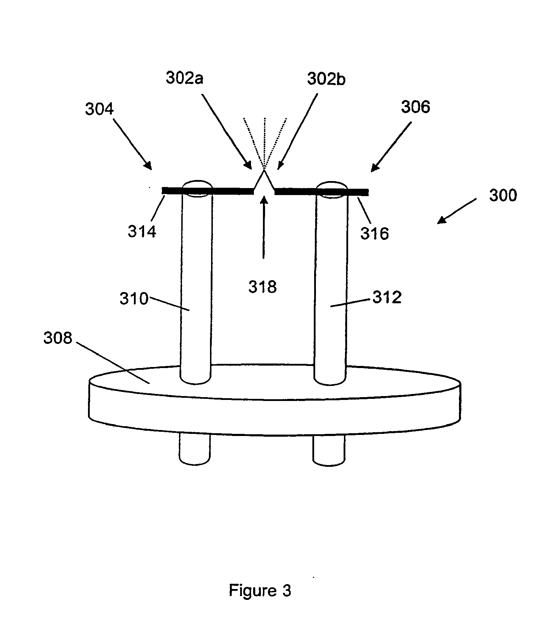

Similarly to the thermionic cathode 100 illustrated in Figure 1, a directional thermionic cathode 300 illustrated in Figure 3 has two electrodes 304, 306 attached to an insulating base 308. The electrodes 304, 306 each comprise a post 310, 312 and a carbon fibre 314, 316 identically arranged to the thermionic cathode 100 described above, e.g. with a gap between around 5 µm wide between the carbon fibres 314, 316. However, the directional thermionic cathode 300 has a separate carbon nanotube 302a, 302b joined to each of the carbon fibres 314, 316 and then joined together to form an apex.

The principle of the directional thermionic cathode 300 shown in Figure 3 is that the emission area of the cathode 300 is predominantly at the tip of the apex of the joined nanotubes 302a, 302b as they are heated by the current passing through them. This provides two advantages over the thermionic cathode 100 shown in Figure 1, and over thermionic cathodes in general: 1) the emission area is very small; and 2) the emission is directed to a far higher extent. This type of cathode 300 provides a coherency and energy spread of the electron beam approaching that of field emission cathodes, but with a far higher current output than is achievable from a standard field emission cathode.

The directional thermionic cathode 300 can be manufactured using the same techniques as for the thermionic cathode 100 described above. However, whilst the carbon nanotubes 302a, 302b could be grown in situ, it is preferred to weld the nanotubes 302a, 302b into position.

### Thermally Assisted Field Emission Cathode

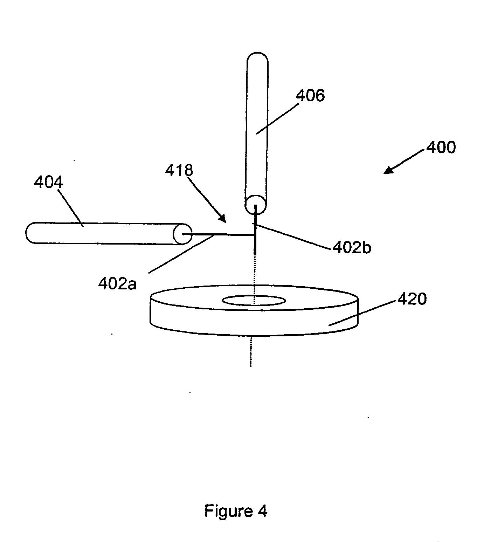

Referring to Figure 4, a thermally assisted field emission cathode 400 comprises two carbon nanotubes 402a, 402b each attached to a respective electrode 404, 406. In this embodiment, the electrodes 404, 406 comprise metal posts arranged orthogonally to one another and attached to a substrate (not shown). Ends of the electrodes distal to the substrate and to which the carbon nanotubes 402a, 402b are attached are spaced apart from one another to form a gap 418, which is again around 5 µm wide.

In this embodiment, the two nanotubes 402a, 402b are joined to each other so that they are oriented orthogonally to each other. An end of the first nanotube 402a is joined to the second nanotube 402b approximately midway along the length of the second nanotube 402b. This forms a nanotube structure having a T-shape. Two ends of the T-shape, e.g. the other end of the first nanotube 402a and one end of the second nanotube 402b are joined to the ends of the electrodes 404, 406. This leaves one end of one of the nanotubes 402a, 402b free, e.g. the other end of the second nanotube 402b.

In use, an extraction anode 420 is located between around 10 µm and 500 µm away from the free end of the second carbon nanotube 402b. When a voltage is applied between the two electrodes 402a, 402b, current flows through the nanotubes 402a, 402b causing them to heat up. With a large positive bias applied to the anode 420 it is possible to extract electrons from the free end of the second nanotube 402b. The advantages of this type of cathode are: firstly that the cathode 400 can be made very small with the entire cathode taking up no more than a few µm; and secondly that the high current carrying capability of carbon nanotubes (typically greater than 10⁹ A/cm²) enables a far higher emission current than is possible with cathodes constructed from conventional materials.

In other embodiments, the two nanotubes 402a, 402b can be of a different type and indeed can be doped to introduce a junction at the connection between them to aid in the production of free electrons for emission.

The thermally assisted thermionic cathode 400 can be manufactured using the same techniques as for the thermionic cathode 100 described above. However, whilst the carbon nanotubes 402a, 402b could be grown in situ, it is again preferred to weld the nanotubes 402a, 402b into position.

This invention relates to cathodes that are based on carbon nanotubes and nanofibres. References to carbon nanotubes in this specification will be understood by the reader to include other material systems pertaining to nano-structured materials whose properties can be nano-engineered to fabricate devices based on the invention disclosed herein. Techniques for producing both thermionic and field emission cathodes will be described. The emission described could be in to vacuum, liquids or solids depending on the application field and the device architecture. The cathodes described are suitable for use as electron emitters in a wide variety of applications including, but not limited to, electron sources in electron microscopes and ultra-compact sources for X-ray tubes, cathode ray tubes for display applications and field emission sources for display applications, e-beam lithography sources in the form of individual or multiple sources, microwave device structures, vacuum microelectronics, space applications in the form of ion thrusters and neutralisers, field emission lighting sources etc.

The described embodiments of the invention are only examples of how the invention may be implemented. Modifications, variations and changes to the described embodiments will occur to those having appropriate skills and knowledge. These modifications, variations and changes may be made without departure from the scope of the invention defined in the claims.

## Claims

1. A cathode (100, 300, 400) for an electron source, the cathode (100, 300, 400) comprising a nanowire structure for emitting electrons under the influence of electric potential applied to the nanowire structure via a support (104, 106, 304, 306, 404, 406) and **characterised by**:
the support (104, 106, 304, 306, 404, 406) providing a gap (118, 318, 418); and
the nanowire structure being suspended across the gap (118, 318, 418).

2. The cathode (100, 300, 400) of claim 1, wherein the nanowire structure comprises a single nanowire (102) extending across the gap (118, 318, 418).

3. The cathode (100, 300, 400) of claim 1, wherein the nanowire structure comprises nanowires (302a, 302b) joined to one another to extend across the gap (118, 318, 418) and provide an apex from which electrons can be emitted.

4. The cathode (100, 300, 400) of claim 1, wherein the nanowire structure comprises nanowires (402a, 402b) joined to one another to extend across the gap (118, 318, 418) and leave a free nanowire end from which electrons can be emitted.

5. The cathode (100, 300, 400) of any one of the preceding claims, wherein the gap (118, 318, 418) is between around 1 to 10 µm wide.

6. The cathode (100, 300, 400) of any one of the preceding claims, wherein the support (104, 106, 304, 306, 404, 406) comprises a pair of carbon fibres (114, 116, 314, 316) spaced apart from one another to provide the gap (118, 318, 418).

7. The cathode (100, 300, 400) of any one of the preceding claims, wherein the support (104, 106, 304, 306, 404, 406) comprises a pair of posts (110, 112, 310, 312) on each of which a respective carbon fibre (114, 116, 314, 316) is mounted.

8. The cathode (100, 300, 400) of any one of the preceding claims, wherein the nanowire structure is a carbon nanotube structure.

9. The cathode (100, 300, 400) of any one of claims 2 to 4, wherein the nanowire(s) (102, 302a, 302b, 402a, 402b) are carbon nanotubes.

10. A thermionic electron source comprising the cathode (100, 300, 400) of any one of the preceding claims.

11. A field emission electron source comprising the cathode (100, 300, 400) of any one of claims 1 to 9.

12. A method of manufacturing a cathode (100, 300, 400) for an electron source, the cathode (100, 300, 400) comprising a nanowire structure for emitting electrons under the influence of electric potential applied to the nanowire structure via a support (104, 106, 304, 306, 404, 406) and the method **characterised by**:
forming the support (104, 106, 304, 306, 404, 406) to provide a gap (118, 318, 418); and
suspending the nanowire structure across the gap (118, 318, 418).

13. The method of claim 12, wherein forming the support (104, 106, 304, 306, 404, 406) comprises removing a portion of the support (104, 106, 304, 306, 404, 406) to provide the gap (118, 318, 418).

14. The method of claim 13, wherein removing the portion of the support (104, 106, 304, 306, 404, 406) comprises passing an electric current along the support (104, 106, 304, 306, 404, 406) to vaporise the portion.

15. The method of any one of claims 12 to 14, wherein suspending the nanowire structure across the gap (118, 318, 418) comprises growing a nanowire (102, 302a, 302b, 402a, 402b) across the gap (118, 318, 418).

16. The method of any one of claims 12 to 14, wherein suspending the nanowire structure across the gap (118, 318, 418) comprises attaching the nanowire structure to the support (104, 106, 304, 306, 404, 406) on each side of the gap (118, 318, 418).

## Patentansprüche

1. Kathode (100, 300, 400) für eine Elektronenquelle, wobei die Kathode (100, 300, 400) eine Nanodrahtstruktur zum Emittieren von Elektronen unter dem Einfluss eines elektrischen Potentials aufweist, das über einen Träger (104, 106, 304, 306, 404, 406) an die Nanodrahtstruktur angelegt wird, **dadurch gekennzeichnet, dass**:
der Träger (104, 106, 304, 306, 404, 406) einen Spalt (118, 318, 418) bereitstellt und
die Nanodrahtstruktur über den Spalt (118, 318, 418) gehängt ist.

2. Kathode (100, 300, 400) nach Anspruch 1, wobei die Nanodrahtstruktur einen einzelnen Nanodraht (102), umfasst, der sich über den Spalt (118, 318, 418) erstreckt.

3. Kathode (100, 300, 400) nach Anspruch 1, wobei die Nanodrahtstruktur Nanodrähte (302a, 302b) umfasst, die miteinander verbunden sind, um sich über den Spalt (118, 318, 418) zu erstrecken und einen Scheitel bereitstellen, von dem Elektronen emittiert werden können.

4. Kathode (100, 300, 400) nach Anspruch 1, wobei die Nanodrahtstruktur Nanodrähte (402a, 402b) umfasst, die miteinander verbunden sind, um sich über den Spalt (118, 318, 418) zu erstrecken und ein freies Nanodrahtende zurückzulassen, von dem Elektronen emittiert werden können.

5. Kathode (100, 300, 400) nach einem der vorstehenden Ansprüche, wobei der Spalt (118, 318, 418) zwischen etwa 1 bis 10 µm breit ist.

6. Kathode (100, 300, 400) nach einem der vorstehenden Ansprüche, wobei der Träger (104, 106, 304, 306, 404, 406) ein Paar Kohlenstofffasern (114, 116, 314, 316) umfasst, die voneinander beabstandet sind, um den Spalt (118, 318, 418) bereitzustellen.

7. Kathode (100, 300, 400) nach einem der vorstehenden Ansprüche, wobei der Träger (104, 106, 304, 306, 404, 406) ein Paar Stützen (110, 112, 310, 312) umfasst, auf denen jeweils eine zugehörige Kohlenstofffaser (114, 116, 314, 316) angebracht ist.

8. Kathode (100, 300, 400) nach einem der vorstehenden Ansprüche, wobei die Nanodrahtstruktur eine Kohlenstoff-Nanoröhrchenstruktur ist.

9. Kathode (100, 300, 400) nach einem der Ansprüche 2 bis 4, wobei der Nanodraht/die Nanodrähte (102, 302a, 302b, 402a, 402b) Kohlenstoff Nanoröhrchen sind.

10. Thermionische Elektronenquelle umfassend die Kathode (100, 300, 400) nach einem der vorstehenden Ansprüche.

11. Feldemmisionselektronenquelle umfassend die Kathode (100, 300, 400) nach einem der Ansprüche 1 bis 9.

12. Verfahren zum Herstellen einer Kathode (100, 300, 400) für eine Elektronenquelle, wobei die Kathode (100, 300, 400) eine Nanodrahtstruktur zum Emittieren von Elektronen unter dem Einfluss eines elektrischen Potentials aufweist, das über einen Träger (104, 106, 304, 306, 404, 406) an die Nanodrahtstruktur angelegt wird, wobei das Verfahren **gekennzeichnet ist durch**:
Bilden des Trägers (104, 106, 304, 306, 404, 406), um einen Spalt (118, 318, 418) bereitzustellen, und
Hängen der Nanodrahtstruktur über den Spalt (118, 318, 418).

13. Verfahren nach Anspruch 12, wobei das Bilden des Trägers (104, 106, 304, 306, 404, 406) das Entfernen eines Teils des Trägers (104, 106, 304, 306, 404, 406) umfasst, um den Spalt (118, 318, 418) bereitzustellen.

14. Verfahren nach Anspruch 13, wobei das Entfernen des Teils des Trägers (104, 106, 304, 306, 404, 406) das Leiten eines elektrischen Stroms entlang dem Träger (104, 106, 304, 306, 404, 406) umfasst, um den Abschnitt zu verdampfen.

15. Verfahren nach einem der Ansprüche 12 bis 14, wobei das Hängen der Nanodrahtstruktur über den Spalt (118, 318, 418) das Bilden eines Nanodrahts (102, 302a, 302b, 402a, 402b) über den Spalt (118, 318, 418) umfasst.

16. Verfahren nach einem der Ansprüche 12 bis 14, wobei das Hängen der Nanodrahtstruktur über den Spalt (118, 318, 418) das Befestigen der Nanodrahtstruktur an dem Träger (104, 106, 304, 306, 404, 406) an jeder Seite des Spalts (118, 318, 418) umfasst.

## Revendications

1. Cathode (100, 300, 400) pour une source d'électrons, la cathode (100, 300, 400) comprenant une structure à nanofil pour émettre des électrons sous l'influence d'un potentiel électrique appliqué à la structure à nanofil par l'intermédiaire d'un support (104, 106, 304, 306, 404, 406) et **caractérisée par**:
le support (104, 106, 304, 306, 404, 406) fournissant un interstice (118, 318, 418) ; et
la structure à nanofil étant suspendue en travers de l'interstice (118, 318, 418).

2. Cathode (100, 300, 400) selon la revendication 1, dans laquelle la structure à nanofil comprend un nanofil unique (102) s'étendant en travers de l'interstice (118, 318, 418).

3. Cathode (100, 300, 400) selon la revendication 1, dans laquelle la structure à nanofil comprend des nanofils (302a, 302b) reliés les uns aux autres pour s'étendre en travers de l'interstice (118, 318, 418) et fournir un sommet à partir duquel des électrons peuvent être émis.

4. Cathode (100, 300, 400) selon la revendication 1, dans laquelle la structure à nanofil comprend des nanofils (402a, 402b) reliés les uns aux autres pour s'étendre en travers de l'interstice (118, 318, 418) et laisser une extrémité de nanofil libre à partir de laquelle des électrons peuvent être émis.

5. Cathode (100, 300, 400) selon l'une quelconque des revendications précédentes, dans laquelle l'interstice (118, 318, 418) est large d'environ 1 à 10 µm.

6. Cathode (100, 300, 400) selon l'une quelconque des revendications précédentes, dans laquelle le support (104, 106, 304, 306, 404, 406) comprend deux fibres de carbone (114, 116, 314, 316) espacées l'une de l'autre pour former l'interstice (118, 318, 418).

7. Cathode (100, 300, 400) selon l'une quelconque des revendications précédentes, dans laquelle le support (104, 106, 304, 306, 404, 406) comprend deux montants (110, 112, 310, 312) sur chacun desquels une fibre de carbone respective (114, 116, 314, 316) est montée.

8. Cathode (100, 300, 400) selon l'une quelconque de revendications précédentes, dans laquelle la structure à nanofil est une structure à nanotubes de carbone.

9. Cathode (100, 300, 400) selon l'une quelconque des revendications 2 à 4, dans laquelle le ou les nanofils (102, 302a, 302b, 402a, 402b) sont des nanotubes de carbone.

10. Source d'électrons thermionique comprenant la cathode (100, 300, 400) selon l'une quelconque des revendications précédentes.

11. Source d'électrons à émission de champ comprenant la cathode (100, 300, 400) selon l'une quelconque des revendications 1 à 9.

12. Procédé de fabrication d'une cathode (100, 300, 400) pour une source d'électrons, la cathode (100, 300, 400) comprenant une structure à nanofil pour émettre des électrons sous l'influence d'un potentiel électrique appliqué à la structure à nanofil par l'intermédiaire d'un support (104, 106, 304, 306, 404, 406) et le procédé **caractérisé par**:
la formation du support (104, 106, 304, 306, 404, 406) pour donner un interstice (118, 318, 418) ; et
la suspension de la structure à nanofil en travers de l'interstice (118, 318, 418).

13. Procédé selon la revendication 12, dans lequel la formation du support (104, 106, 304, 306, 404, 406) comprend le retrait d'une partie du support (104, 106, 304, 306, 404, 406) pour former l'interstice (118, 318, 418).

14. Procédé selon la revendication 13, dans lequel le retrait de la partie du support (104, 106, 304, 306, 404, 406) comprend le passage d'un courant électrique le long du support (104, 106, 304, 306, 404, 406) pour vaporiser la partie.

15. Procédé selon l'une quelconque des revendications 12 à 14, dans lequel la mise en suspension de la structure à nanofil en travers de l'interstice (118, 318, 418) comprend la croissance d'un nanofil (102, 302a, 302b, 402a, 402b) en travers de l'interstice (118, 318, 418).

16. Procédé selon l'une quelconque des revendications 12 à 14, dans lequel la mise en suspension de la structure à nanofil en travers de l'interstice (118, 318, 418) comprend la fixation de la structure à nanofil au support (104, 106, 304, 306, 404, 406) de chaque côté de l'interstice (118, 318, 418)
